(19) Europäisches Patentamt
European Patent Office
Office européen des brevets

(11) EP 4 378 872 A1

(12) **EUROPEAN PATENT APPLICATION**

(43) Date of publication:
05.06.2024 Bulletin 2024/23

(51) International Patent Classification (IPC):
*B65H 75/44* (2006.01)

(21) Application number: 23212127.7

(52) Cooperative Patent Classification (CPC):
**B65H 75/4484; B65H 75/4463;** B65H 2701/33;
B65H 2701/34

(22) Date of filing: 24.11.2023

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.11.2022 GB 202217940

(71) Applicant: The University of Sheffield
Sheffield S10 2TN (GB)

(72) Inventors:
• SCRAGGS, Chris
Bristol (GB)
• LINDSAY, James
Bristol (GB)

(74) Representative: Abel & Imray LLP
Westpoint Building
James Street West
Bath BA1 2DA (GB)

(54) **SPOOLING APPARATUS AND METHODS RELATING THERETO**

(57) A spooling apparatus (100) is arranged to provide one or more services to a remote ground vehicle in a maintenance facility via a multi-line elongate carrier (92). The spooling apparatus (100) includes a base (5) for receiving services to be provided to the remote ground vehicle through the elongate carrier (92), and a turntable (25) mounted on the base (5) and arranged to rotate with respect to the base (5). A spooling drum (35) which houses the elongate carrier (92) is mounted on the turntable (25) and is free to rotate so that as the vehicle moves within the maintenance facility the elongate carrier (92) remains oriented towards the remote ground vehicle.

Fig. 4b

EP 4 378 872 A1

**Description**

BACKGROUND OF THE INVENTION

The present invention concerns cable spooling apparatus. More particularly, but not exclusively, this invention concerns spooling systems for multi-line chain carriers used in manufacturing and servicing applications where services such as power, compressed air and data are provided by a spooled chain carrier within a facility.

Spools for services are commonly found in manufacturing and servicing environments, and particularly in reconfigurable facility floors where large vehicles or work pieces may be worked on, and where services may be required at different locations within the facility at different times.

Multi-line chain carriers have been developed which can provide more than one service within the same carrier, using a chain of connected hollow links within which cables and hoses are carried. An example of such a multi-line chain carrier is the plastic e-chain® made by Igus® GmbH. Such chain carriers provide increased protection for the lines, prevent tangling, and reduce the number of discrete cables and hoses which otherwise would extend across the floor of the facility. This improves safety and reduces the likelihood of damage to the cables.

A spooling drum containing a retracted chain carrier such as that mentioned above is connected to the service sources, and an end of the chain carrier is unwound from the drum and extended across the floor of the facility where it is plugged in to the unit or machine requiring the services.

Depending upon the size and shape of the workpiece and the work being performed, it may be the case that the services are required by a mobile unit while it is moving within an extended area of the facility floor.

However a drawback with these types of chain carriers is that they cannot flex horizontally, and can therefore only extend in one direction from the spooling drum, the latter being typically fixed to the facility floor. This restricts the area in which the services provided by chain carrier may be deployed within the facility, and is particularly problematic if the services are provided to a unit which is required to move while using the services, such as an autonomous ground vehicle.

The present invention seeks to mitigate one or more of the above-mentioned problems. Alternatively or additionally, the present invention seeks to provide an improved spooling apparatus and associated method.

SUMMARY OF THE INVENTION

The present invention provides, according to a first aspect, a spooling apparatus for providing one or more services via an elongate carrier to a remote ground vehicle. The spooling apparatus comprises a base for receiving one or more services to be provided to the ground vehicle; a turntable coupled to the base and arranged to rotate with respect to the base; and, a spooling drum mounted on the turntable. The spooling drum is arranged for spooling the elongate carrier in a spooling direction, so that rotation of the spooling drum via the turntable provides alignment of the spooling direction towards the ground vehicle.

In this way the embodiment provides a spooling apparatus for providing one or more services to a mobile unit such as an autonomous ground vehicle (AGV), in a manner which allows the elongate carrier to remain aligned with the unit as it moves across a surface, such as the floor of a reconfigurable maintenance facility.

This is particularly advantageous in the case of an AGV which carries an automated manufacturing tool such as a robot. The size, weight and manoeuvrability requirements of the AGV and the services requirements of the attached robot may mean that the one or more services cannot be stored at the AGV and they must therefore be supplied via cables and hoses. The AGV and robot may require power, compressed air and data transfer services in order to operate, and these are conveniently and safely provided to the AGV by the elongate carrier. The arrangement allows the AGV to move freely within the maintenance facility, with the rotation of the spooling apparatus providing continuous alignment of the spooling direction of the elongate carrier with the position of the AGV. This avoids any interruption of the operation of the AGV (and therefore the robot) as it moves within the maintenance facility.

In embodiments, the spooling drum is mounted on a shaft for rotation about its axis, with the axis being horizontal. The drum may therefore be described as being vertically arranged. It will be appreciated that the turntable will typically be mounted for rotation about a vertical axis.

A flexible services conduit is preferably coupled between the base and the turntable for providing the one or more services therebetween.

The flexible services conduit may be a multi-cable conduit containing separate lines for each of the one or more services provided by the spooling apparatus. The flexible services conduit may be coupled between a fixed terminal mounted on the base and a further terminal mounted on the turntable.

One or other (or both) of the fixed terminal and the further terminal may be provided with regulation apparatus such as voltage or current regulators for the electrical service and pressure regulators for regulating compressed air.

Preferably the base includes end-stops which prevent rotation of the turntable beyond the range of movement of the flexible services conduit.

In this way strain between the flexible services conduit and either or both of the couplings to the fixed terminal or the further terminal is avoided, which could otherwise compromise the integrity of the couplings and risk interruption of the provision of the one or more services by the spooling apparatus.

Preferably the turntable is arranged to rotate through at least 100 degrees of an arc with respect to the base.

This may be at least 90 degrees in a first direction away from an orthogonal position, and at least 10 degrees in a further direction opposite the first direction. It will be appreciated that with a longer flexible services conduit, or with an arrangement where the fixed services terminal is provided on a gantry mounted above the turntable, an even greater degree of freedom of rotation may be provided, such as at least 180 degrees (at least 90 degrees either side of the orthogonal position).

The base is preferably adapted to be manoeuvrable within a reconfigurable manufacturing facility.

The base may include a skid, rollers, wheels or castors which allow the spooling apparatus to be manoeuvred within the manufacturing facility. The base may include a tow bar, bracket or similar hitch arrangement which allows the spooling apparatus to be towed into position within the manufacturing facility by a tug or tractor.

It will be appreciated that the spooling apparatus may require repositioning when the reconfigurable manufacturing facility is being reconfigured between phases of work, for example when one workpiece has been removed from the facility and a different workpiece (perhaps with different dimensions, or with a different orientation to the floor of the facility) is to be worked on.

The spooling apparatus may therefore be positioned at a predetermined location within the reconfigurable manufacturing facility in order to provide the one or more services within a specified area of the facility corresponding to the position and orientation of a specific workpiece.

The elongate carrier of the spooling apparatus may include a twist management section. The twist management section may for example extend from the inner diameter of the spooling drum along an extension of the shaft of the spooling drum. The twist management section may alternatively extend from the inner diameter of the spooling drum and around a coaxially arranged secondary shaft adjacent to the spooling drum. The twist management section may also extend to a fixed location on the turntable, for example the above-mentioned further terminal mounted on the turntable. In use, when the spooling drum winds or unwinds, the twisting that would otherwise be caused in lines carrying the one or more services between the spooling drum and the turntable is accommodated by the twist management section, for example by moving around the shaft. As such, the spooling drum does not require any slip ring for connecting services to it. It may therefore be the case that fluid services, such as air, may be connected from the base to a ground vehicle via both the rotating turntable and the rotating spooling drum, without any discontinuity in the line used to carry the fluid service. The twist management section may be configured such that the minimum radius of curvature achievable when the elongate carrier in the twist management section flexes in normal operation is greater than or equal to the minimum radius of curvature permitted in the line used to carry the fluid service. The twist management section may be configured such that its minimum radius of curvature, in use, is less than the minimum radius of curvature in the other parts of the elongate carrier.

Preferably the spooling drum is carrying the elongate carrier, and the elongate carrier is a semi-rigid elongate chain arranged for carrying the one or more services. The semi-rigid elongate chain is flexible in the vertical direction and substantially rigid in the horizontal direction.

The elongate carrier may have a portion spooled within the spooling drum, and a portion extending from the spooling drum. During spooling of the elongate carrier, the amount of the elongate carrier extending from the spooling drum is varied.

Preferably all of the elongate carrier that is wound on the spooling drum, or unwound therefrom, is in the form of such a semi-rigid elongate chain. It is preferred that the flexibility in the vertical direction of the semi-rigid elongate chain is limited such that the minimum radius of curvature achievable in normal operation is greater than the minimum radius of curvature permitted in the lines used to carry the services. This ensures that the cables, hoses, conduits and the like that carry the services and that are held within the elongate carrier are prevented from being bent beyond a safe limit.

The semi-rigid elongate chain may comprise a series of connected hollow links, which allow flexion vertically but which are rigid horizontally, such as the plastic e-chain® made by Igus® GmbH. The connected hollow links provide a conduit by which the power and data cables and air lines are carried. The semi-rigid elongate chain may be up to twenty metres in length. It will be appreciated that the flexing in the vertical direction is facilitated by means of rotation of adjacent links about a link rotations axis that will typically be horizontally aligned.

Preferably the elongate carrier includes holes or other formations suitable for enabling the mounting of the conduits, cables, pipes, wires or the like for carrying services to the elongate carrier. The elongate carrier may be configured such that all conduits, cables, pipes, wires or the like carrying services are held within the elongate carrier, such that all services are constrained within the notional envelope of the elongate carrier when viewed in cross-section. Furthermore the elongate carrier may have internal fences or guides which ensure that the cables, pipes or wires within the elongate carrier do not become entangled, but are each guided within a defined, separated internal pathway of the elongate carrier.

The one or more services to be provided to the ground vehicle preferably include a fluid that passes via the base of the spooling apparatus.

The one or more services preferably includes at least two of data, power, and compressed air. The one or more services may include electric power. The one or more services may include hydraulic power.

According to a second aspect of the invention there is provided a spool system comprising: a spooling apparatus as described above; a ground vehicle remote from the spooling apparatus; and an elongate carrier coupled between the spooling drum and the ground vehicle.

The elongate carrier is preferably a semi-rigid elongate chain and is arranged for carrying one or more services. It may be referred to as a multi-line chain. In use the semi-rigid elongate chain may only contain one service carrying line (the line being an electrical cable, a data cable or a gas hose), or any two of such lines.

Preferably the spooling apparatus is arranged for providing the one or more services from the ground vehicle to the base via the elongate carrier.

Such one or more services may include data, which may be conveyed within the semi-rigid elongate chain by a bi-directional data cable arranged to transmit data in both directions (from and to the remote ground vehicle). Alternatively there may be two dedicated unidirectional cables, one for each direction of transmission.

Preferably the alignment of the spooling direction occurs during movement of the ground vehicle relative to the spooling apparatus.

In this way as the ground vehicle moves laterally relative to the spooling apparatus, any angular displacement (when viewed from the spooling apparatus) causes the turntable to rotate such that the spooling direction of the cable chain remains aligned with the ground vehicle.

According to a third aspect of the invention there is also provided a method of providing one or more services to a remote ground vehicle via an elongate carrier, where the elongate carrier is spooled from a spool in a spooling direction. The method comprises: coupling an end of the elongate carrier to the ground vehicle; and rotating the spool in dependence upon movement of the ground vehicle. In this way the spooling direction tracks the movement of the ground vehicle.

It will be appreciated that the rotation of the spool may occur due to the action of the elongate carrier, as the ground vehicle moves laterally with respect to the spool.

Preferably, prior to the step of coupling, the method includes: rotating the spool to align the spooling direction towards the ground vehicle; and winding the spool such that the end of the elongate carrier reaches the ground vehicle.

The one or more services is preferably provided to a robot mounted on the ground vehicle.

It will be appreciated that, where the one or more services comprises a plurality of services, some or all of the plurality of services may be required by the ground vehicle, and in addition some or all of the plurality of services may be required by the robot. For example electrical power may be required by the ground vehicle for movement and for powering control and processing systems, and the same electrical power may be required by the robot for actuation.

Preferably the ground vehicle is an autonomous ground vehicle arranged to provide movement of the robot within a reconfigurable manufacturing facility.

In some embodiments, the autonomous ground vehicle may follow a set path along the ground. It will be understood that the autonomous ground vehicle may follow a path determined by internal guidance, optical or laser guidance or by some other mechanism, in order to accomplish manufacturing or maintenance tasks at a workpiece within the facility floor. In such cases, the path may not be, or may not need to be, exactly parallel to the workpiece.

In some embodiments, the autonomous ground vehicle may follow a path that is, at least in part, dictated by the robot and/or by the work-piece on which the robot is working. In some case, the robot may provide steering guidance to the autonomous ground vehicle.

The robot may for example provide fabrication or testing steps on a wing, fuselage or other large workpiece of an aircraft within the manufacturing facility. The size of such a workpiece means that the autonomous ground vehicle carrying the robot may have to follow (for example, at least to a first approximation) the contours of the workpiece, whether or not under the direction of the robot, and therefore is required to follow a nonlinear path over a large area of the manufacturing facility.

The aircraft is preferably a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft.

A spool tensioning system and method and an autonomous ground vehicle are described and claimed in EP patent application entitled "SPOOL TENSION COUPLING, SYSTEM AND METHOD" with agent's reference "P036733EP PJK JGP", having the same filing date as the present application. The contents of that application are fully incorporated herein by reference. The claims of the present application may incorporate any of the features disclosed in that patent application. In particular, the claims of the present application may be amended to include features relating to the spooling tensioning system and the ground vehicle.

It will of course be appreciated that features described in relation to one aspect of the present invention may be incorporated into other aspects of the present invention. For example, the method of the invention may incorporate any of the features described with reference to the apparatus of the invention and *vice versa.*

DESCRIPTION OF THE DRAWINGS

Embodiments of the present invention will now be described by way of example only with reference to the accompanying schematic drawings of which:

Figure 1 shows a front view of a spooling apparatus according to a first aspect of the invention;
Figure 2 shows a rear view of the spooling apparatus of Figure 1;
Figure 3 shows a side view of the spooling apparatus of Figures 1 and 2;
Figures 4a, 4b and 4c show cutaway plan views of the spooling apparatus of Figures 1, 2 and 3; and,
Figure 5 is a flow diagram illustrating a method of providing services via a spool according to a second aspect of the invention.

DETAILED DESCRIPTION

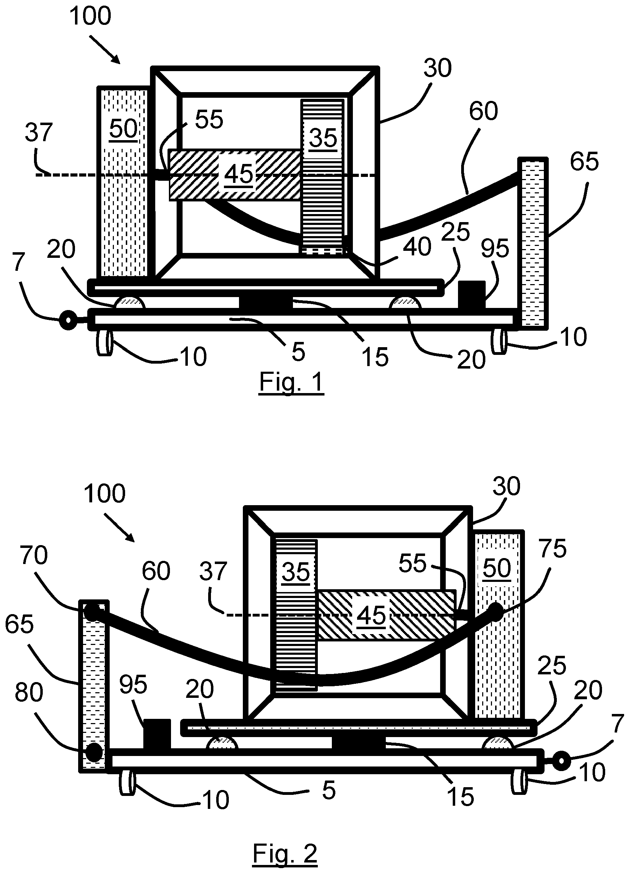

Referring to Figs. 1 and 2, a spooling apparatus 100 is shown. The spooling apparatus 100 has a base 5 which is supported on the ground by castors 10, and a master mover bracket 7 which allows the spooling apparatus 100 to be towed by a tug or tractor (not shown). A turntable 25 is coupled to the base 5 via a heavy-duty slewing ring 15, and is further supported on the base by three spring ball transfer units 20, only two of which are visible in Figs. 1 and 2. The slewing ring 15 and ball transfer units allow the turntable 25 to rotate in a horizontal sense (in azimuth) with respect to the base 5. Excess rotation of the turntable 25 is prevented by a stop 95 in a manner to be further described below.

The base 5 also includes a services terminal 65, which has an input coupling 80 arranged for receiving services to be further described below, and an output coupling 70 for providing the services to one end of a flexible multi-cable conduit 60.

A frame 30 is mounted on the turntable 25, and contains a spooling drum 35 arranged to rotate on a shaft about a horizontal axis 37. The spooling drum 35 contains a portion of a multi-line elongate carrier or chain (not shown in Fig. 1 or Fig. 2), which is extended or retracted from the drum 35 via a feed orifice 40. The elongate chain may be a plastic e-chain® made by Igus® GmbH, or any other semi-rigid multi-line chain comprising hollow links, arranged to house one or more cables or hoses for providing services such as electric power, compressed air and data. A further portion of the elongate chain forms a twisted chain arrangement 45 which is also arranged to rotate on the shaft about the horizontal axis 37 in the same manner as the spooling drum 35. An example of the twisted chain arrangement 45 is a 'twisterband' made by Igus® GmbH.

The frame 30 also contains a services connection and control box 50, which has a services coupling 75 connected to the other end of the flexible multi-cable conduit 60, and a chain connection terminal 55. The services connection and control box 50 also includes a motor (not shown) for rotating the spooling drum 35 about the axis 37.

The twisted chain arrangement 45, (or twist management section) extends from the inner diameter of the spooling drum 35, along an extension of the shaft of the spooling drum 35, to the chain connection terminal 55. When the elongate chain is fully retracted within the spooling drum 35, the twisted chain arrangement 45 has one twisted loop for each 'loop' of the elongate chain contained within the spooling drum 35. In use, as the spooling drum 35 is rotated to feed out the elongate chain, one twisted loop of the elongate chain is unwound from the twisted chain arrangement 45 for each 'loop' of the elongate chain spooled out from the spooling drum 35. This ensures that the elongate chain does not foul on the spooling drum 35, and that the end of the elongate chain at the twisted chain arrangement 45 remains in alignment with the chain connection terminal 55. Therefore when the spooling drum 35 spools the elongate chain either to extend or retract, the twisting that would otherwise be caused in the elongate chain between the spooling drum 35 and the chain connection terminal 55 is accommodated by twisted chain arrangement 45 moving around the shaft.

In this way, an uninterrupted path is provided between the chain connection terminal 55 and the end of the elongate chain, which provides the means by which a number of service cables and hoses may be provided to a ground vehicle or other device coupled to the end of the elongate chain without interruption.

As such, the spooling drum 35 does not require any slip ring for connecting services to it. It may therefore be the case that fluid services, such as air, may be conveyed in a single hose which is connected between the output coupling 70 of the base 5 and a services terminal of the ground vehicle (not shown), without any discontinuity in the hose used to carry the fluid service. This is achieved by routing the hose via the flexible multi-cable conduit 60, through the services connection and control box 50, and then within the elongate chain as it runs through the twisted chain arrangement 45, through the portion of the elongate chain within the spooling drum 35 and through the portion of the elongate chain that extends from the feed orifice 40.

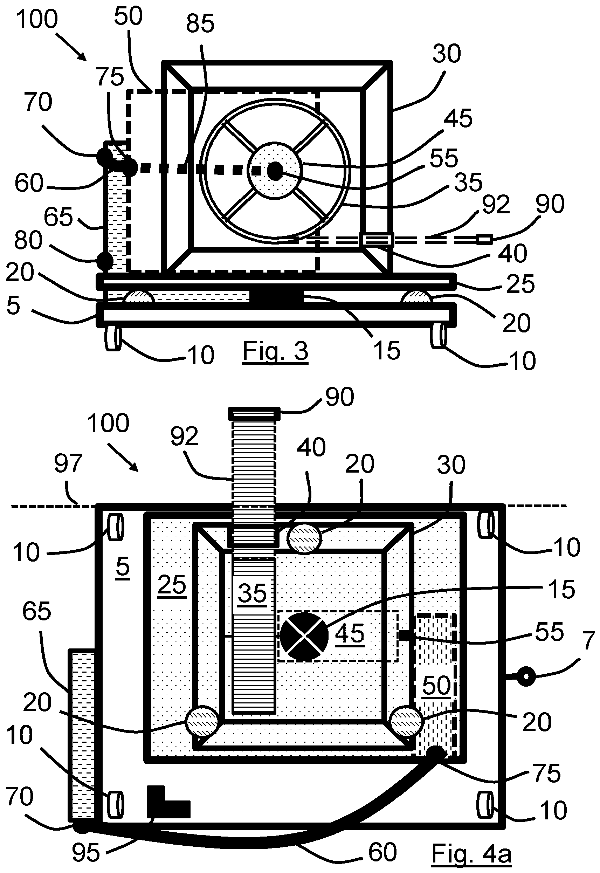

Referring now also to Fig. 3, a cutaway side-view of the spooling apparatus 100 is shown, which illustrates the path taken by services through the spooling apparatus 100 to an exposed portion 92 of the elongate chain, where the service cables and hoses terminate at an end terminal 90.

The services, which in this embodiment include all of electricity, compressed air and data are provided via cables and hoses (not shown) to the input coupling 80 of the services terminal 65. It will be appreciated that the input coupling 80 may have separate connections for each cable and hose. The services are conveyed within the services terminal 65 by internal connections (not shown) to the output coupling 70 where they are connected to service cables and hoses (not shown) within the flexible multi-cable conduit 60. Again it will be appreciated that the output coupling 70 may have separate connections for each cable and hose. The services terminal 65 may include internal switches, valves and other means of regulating or controlling aspects of the services. For example where the services include electricity a voltage regulator may be provided in order to ensure a regulated voltage is provided at the output coupling 70.

The flexible multi-cable conduit 60 provides a path for the service cables and hoses from the output coupling 70 to the services coupling 75 of the services connection box 50 in a flexible manner which allows for rotation of the turntable 25 whilst maintaining the services connections between the services terminal 65 and the services connection box 50.

An internal portion 85 of the hose or hoses may proceed within the services connection box 50 to the chain connection terminal 55, where they are fed through to the end of the twisted chain arrangement 45 of the elongate chain, through the portion of the elongate chain spooled within the drum 35 and out via the feed orifice 40 to the exposed portion 92 of the elongate chain, which terminates at an end terminal 90.

In this way the hoses are protected and guided from the output coupling 70 to the end terminal 90.

In the case of electricity and data cables, these provide power and data for use internally by the services connection box 50, and other internal connections of the services connection box (not show) provide the electricity and data services to data and electricity couplings (not shown) of the chain connection terminal 55 at end of the twisted chain arrangement 45.

It will be appreciated that services may also be arranged to be provided in the other direction. For example data signals may be received at the end terminal 90 of the elongate chain for transmission to the input coupling 80 of the services terminal 65 where they may then be sent via cables to a receiver terminal (not shown), or other apparatus of the spooling apparatus.

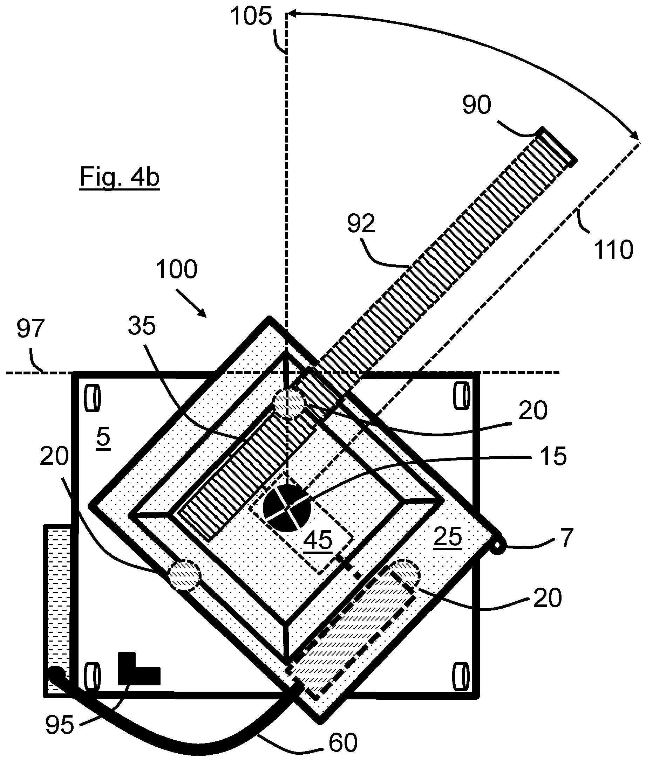

Referring now also to Figs. 4a to 4c, top-down cutaway views of the spooling apparatus 100 are shown. In Fig. 4a, the exposed portion 92 of the elongate chain and the end terminal 90 extend away from the apparatus perpendicular to a front face 97 of the base 5, as shown in Fig. 4b by datum line 105. In Fig. 4b the turntable 25 is rotated about the slewing ring 15 from the datum line 105 by an angle of approximately 45 degrees (as shown by line 110), and more of the exposed portion 92 of the elongate chain extends from the drum 35 such that the end terminal 90 is further away from the spooling apparatus 100. The three spring ball transfer units 20 can be clearly seen in this cutaway Fig. and their function to support the turntable 25 as it is rotated about the slewing ring 15 will be readily appreciated.

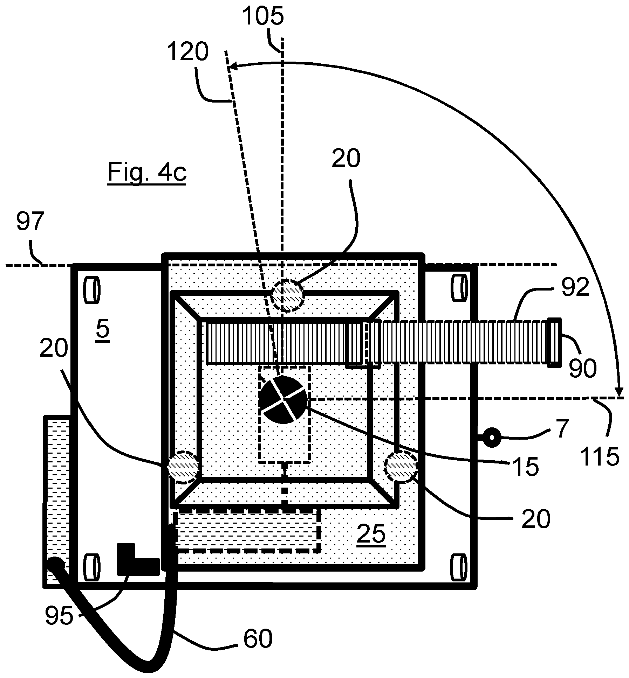

In Fig. 4c the turntable 25 is rotated further about the slewing ring 15 from the datum line 105 by an angle of approximately 90 degrees (as shown by line 115), and the elongate chain is retracted once again such that the end terminal 90 is closer to the spooling apparatus 100 than in Fig. 4b.

The stop 95 limits the rotation of the turntable 25 to approximately 90 degrees to the right (as shown in Fig. 4c), and 10 degrees to the left (as shown by line 120). The limits placed on the freedom of rotation of the turntable 25 are chiefly governed by the length and amount of flex provided by the flexible multi-cable conduit 60.

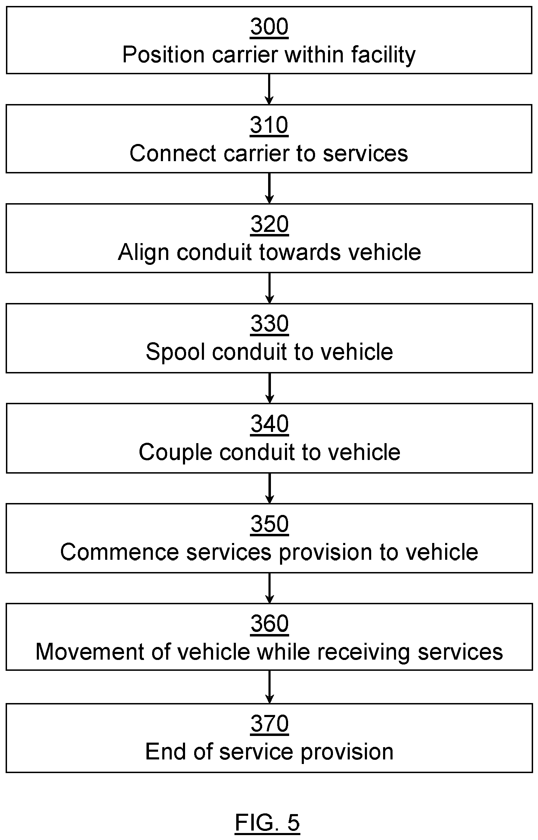

In operation and referring now also to Fig. 5, a method of operating the spooling apparatus 100 is described. At a step represented by box 300, the spooling apparatus 100 is moved into position within the manufacturing facility or other location where it is to be used. This may be achieved using a tug or tractor coupled to the master mover bracket 7. The position and orientation of the base 5 of the spooling apparatus 100 is chosen in order to provide the services within a determined area of the facility, which may be termed a 'clean floor'. For example a particular workpiece, such as an aircraft wing, may be within the facility, and a ground vehicle may be required to perform a process on a large portion of the wing, such as a front surface. In this case the spooling apparatus 100 would be positioned relative to the workpiece so that a 'clean floor' area around the front surface of the wing is defined. This allows the ground vehicle to complete an excursion of the entire front surface of the workpiece while remaining coupled to receive the services from the spooling apparatus 100 via the exposed portion 92 of the elongate chain. This 'clean floor' area is, apart from the ground vehicle and the exposed portion 92 of the elongate chain, otherwise clear of obstacles such as cables, hoses, tools and other objects which could interfere with the movement of the ground vehicle.

At a step represented by box 310 the input coupling 80 of the services terminal 65 is connected to the services, which include electric power, compressed air and data. The services are each provided by discrete cables and hoses, which may also be spooled from their respective sources. However it will be appreciated that the portion of the facility where such discrete hoses and cables may run do not include the 'clean floor' operating area required for the ground vehicle while performing the process on the workpiece.

At a step represented by box 320 the turntable 25 is rotated so that the direction of the elongate chain extension lines up with a starting location of the ground vehicle to which services are to be provided, it will be appreciated that the starting location will be within the 'clean floor' area of the facility.

At a step represented by box 330 the spooling drum 35 is rotated by the motor (not shown) which is within the services connection box 50 in order to extend the exposed portion 92 of the elongate chain so that the end terminal 90 is spooled out to the ground vehicle. The twisted chain arrangement 45 also rotates in cooperation with the rotation of the spooling drum 35.

At a step represented by box 340, the end terminal 90 is connected to the ground vehicle. The terminal 90 is a composite terminal which may include a physical coupling between the end of the elongate chain and a bracket of the ground vehicle, and multiple connection terminals for operably coupling each of the services to the ground vehicle.

At a step represented by box 350, the services are then provided to the ground vehicle, which is then able to use them for operating power, control, and to provide compressed air for various applications.

At a step represented by box 360, the ground vehicle starts to move while receiving the services. The end terminal 90 may be extended away from the drum 35 as the elongate chain is spooled out (unwound) from the drum 35.

A typical maximum spooling length (representing maximum extension of the elongate chain away from the spooling apparatus 100 may be up to 20 metres. Therefore the overall operating area in which the services may be provided by the spooling apparatus 100 is a minor sector of approximately 100 degrees of arc, at a straight-line distance of up to 20 metres from the spooling apparatus 100. Using the sector area formula $\frac{\theta}{360}\pi r^2$, where $\theta$=100 degrees and r=20m, this provides an operating area of approximately 350 square metres in which a ground vehicle coupled to the spooling apparatus 100 via the multi-line chain may operate while receiving services via the multi-line chain.

The spooling apparatus 100 may provide services via the end terminal 90 to a mobile receiving unit such as an autonomous ground vehicle (AGV), in a way which facilitates movement of the AGV within the arc and distance described above. This is particularly useful if the AGV is required to operate over a large distance, such as is the case when a robot mounted on the AGV is performing manufacturing steps or other operations on a large workpiece such as an aircraft wing or other structure within the maintenance facility.

At a step represented by box 370, the provision of the services may be ended when the ground vehicle has completed its tasks and, optionally, returned to its starting location. The services are then disconnected and the ground vehicle may be repositioned.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The internal switches, valves and other means of regulating or controlling aspects of the services provided at the services terminal 65 may alternatively or additionally be also provided at the services connection box 50.

Furthermore one or more separate sections of cabling and hose may be provided between the output coupling 70 and the chain connection terminal 55. For example the flexible multi-cable conduit 60 may contain discrete cables and hoses which are coupled between the output coupling 70 and the services coupling 75 of the services connection box 50.

For example the castors 10 could be replaced by wheels, rollers or skids.

The stop 95 could be replaced by multiple stops. Furthermore if the fixed terminal were mounted on a gantry extending above the turntable 25, the multi-cable conduit 60 may be arranged to extend from the, thus allowing more rotational freedom for the turntable 25 than described above.

Furthermore the angles and distances may differ from those described above.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Claims**

1. A spooling apparatus for providing services via an elongate carrier to a remote ground vehicle, the services including at least two of data, power, and compressed air, the spooling apparatus comprising:

   a base for receiving services to be provided to the ground vehicle;
   a turntable coupled to the base and arranged to rotate with respect to the base; and,
   a spooling drum mounted on the turntable, the spooling drum being arranged for spooling the elongate carrier in a spooling direction,
   a flexible services conduit coupled between the base and the turntable for providing the services therebetween,

   such that rotation of the turntable aligns the spooling direction towards the ground vehicle during movement of the ground vehicle.

2. The spooling apparatus of claim 1, wherein the base includes end-stops which prevent rotation of the turntable beyond the range of movement of the flexible services conduit.

3. The spooling apparatus of claim 1 or claim 2, wherein the turntable is arranged to rotate through at least 100 degrees of an arc with respect to the base.

4. The spooling apparatus of any preceding claim, wherein the base is adapted to be manoeuvrable within a reconfigurable manufacturing facility.

5. The spooling apparatus of any preceding claim wherein the spooling drum is carrying the elongate carrier, and wherein the elongate carrier is a semi-rigid elongate chain arranged for carrying the services, the semi-rigid elongate chain being flexible in the vertical direction and substantially rigid in the horizontal direction.

6. The spooling apparatus of any preceding claim, wherein the services to be provided to the ground vehicle include a fluid that passes via the base of the spooling apparatus.

7. A spool system comprising:

a spooling apparatus as claimed in any preceding claim;
a ground vehicle remote from the spooling apparatus; and
an elongate carrier coupled between the spooling drum and the ground vehicle.

8. The system of claim 7, wherein the spooling apparatus is arranged for providing data signals from the ground vehicle to the base via the elongate carrier.

9. A method of providing services to a remote ground vehicle via an elongate carrier, the services including at least two of data, power, and compressed air, the elongate carrier being spooled from a spool in a spooling direction, the method comprising:

coupling an end of the elongate carrier to the ground vehicle; and
rotating the spool horizontally in dependence upon movement of the ground vehicle, wherein the spooling direction tracks the movement of the ground vehicle.

10. The method of claim 9, further comprising the steps of:
prior to the step of coupling; rotating the spool horizontally to align the spooling direction towards the ground vehicle, and spooling the elongate carrier such that the end of the elongate carrier reaches the ground vehicle.

11. The system or method of any one of claims 7 to 10, wherein the services are provided to a robot mounted on the ground vehicle.

12. The system or method of claim 11, wherein the ground vehicle is an autonomous ground vehicle arranged to provide movement of the robot within a reconfigurable manufacturing facility.

13. The system or method of claim 12, wherein the robot provides steering guidance to the autonomous ground vehicle.

Fig. 1

Fig. 2

Fig. 3

Fig. 4a

Fig. 4b

Fig. 4c

**300**
Position carrier within facility

↓

**310**
Connect carrier to services

↓

**320**
Align conduit towards vehicle

↓

**330**
Spool conduit to vehicle

↓

**340**
Couple conduit to vehicle

↓

**350**
Commence services provision to vehicle

↓

**360**
Movement of vehicle while receiving services

↓

**370**
End of service provision

FIG. 5

Europäisches
Patentamt

European
Patent Office

Office européen
des brevets

# EUROPEAN SEARCH REPORT

Application Number

EP 23 21 2127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 647 554 A (IKEGAMI MASASHI [JP] ET AL) 15 July 1997 (1997-07-15) | 1-4,7, 9-13 | INV. B65H75/44 |
| Y | * column 1, lines 16-21 * <br> * column 1, line 58 - column 2, line 22 * <br> * column 2, line 62 - column 3, line 12 * <br> * column 3, lines 37-48; figures * | 5,6,8 | |
| Y | DE 10 2012 110967 A1 (IGUS GMBH [DE]) 16 May 2013 (2013-05-16) <br> * paragraphs [0042] - [0045]; figures * | 5 | |
| X | JP H11 147672 A (NIPPON STEEL WELDING PROD ENG) 2 June 1999 (1999-06-02) | 1,3,4, 6-13 | |
| Y | * paragraphs [0001], [0012]; figures * | 6,8 | |
| A | WO 2018/075365 A1 (GREAT STUFF INC [US]) 26 April 2018 (2018-04-26) <br> * paragraph [0086]; figures 7A,B * | 1 | |
| A | US 7 931 133 B2 (SOAVE ENTPR L L C [US]) 26 April 2011 (2011-04-26) <br> * column 2, lines 1-6; figures * | 1 | TECHNICAL FIELDS SEARCHED (IPC) |
| A | JP H05 115396 A (SANYO ELECTRIC CO) 14 May 1993 (1993-05-14) <br> * paragraphs [0014] - [0016]; figures * | 1 | B65H <br> H02G |

The present search report has been drawn up for all claims

| Place of search | Date of completion of the search | Examiner |
|---|---|---|
| The Hague | 2 April 2024 | Lemmen, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2127

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2024

| Patent document cited in search report | | Publication date | Patent family member(s) | | Publication date |
|---|---|---|---|---|---|
| US 5647554 | A | 15-07-1997 | NONE | | |
| DE 102012110967 | A1 | 16-05-2013 | DE 102012110967 | A1 | 16-05-2013 |
| | | | DE 202011107804 | U1 | 16-12-2011 |
| JP H11147672 | A | 02-06-1999 | NONE | | |
| WO 2018075365 | A1 | 26-04-2018 | AU 2017346478 | A1 | 09-05-2019 |
| | | | CA 3040267 | A1 | 26-04-2018 |
| | | | CN 110121473 | A | 13-08-2019 |
| | | | EP 3526149 | A1 | 21-08-2019 |
| | | | NZ 752725 | A | 28-08-2020 |
| | | | US 2019248621 | A1 | 15-08-2019 |
| | | | WO 2018075365 | A1 | 26-04-2018 |
| US 7931133 | B2 | 26-04-2011 | NONE | | |
| JP H05115396 | A | 14-05-1993 | NONE | | |

EPO FORM P0459

For more details about this annex : see Official Journal of the European Patent Office, No. 12/82